# EUROPÄISCHE PATENTSCHRIFT

(11) **EP 3 026 304 B1**
(45) Veröffentlichungstag und Bekanntmachung des Hinweises auf die Patenterteilung: **27.06.2018**
(21) Anmeldenummer: 15193097.1
(22) Anmeldetag: 05.11.2015
(51) Int. Cl.: F16J 15/02, F16J 15/3268, B25B 27/00

(54) **MONTAGEVORRICHTUNG FÜR EINEN DICHTRING**
MOUNTING DEVICE FOR A SEALING RING
DISPOSITIF DE MONTAGE POUR UNE BAGUE D'ETANCHEITE

(30) Priorität: 13.11.2014 DE 102014016722
(43) Veröffentlichungstag der Anmeldung: 01.06.2016
(73) Patentinhaber: Carl Freudenberg KG, 69469 Weinheim (DE)
(72) Erfinder: Colineau, Francois, 69469 Weinheim (DE); Hintenlang, Günter, 69518 Abtsteinach (DE); Heldmann, Martin, 64678 Lindenfels (DE); Spiegelhalter, Horst, 69593 Hirschberg (DE)

(56) Entgegenhaltungen:
- EP-A1- 1 916 509
- DE-C2- 2 340 275

## Beschreibung

### Technisches Gebiet

Die Erfindung betrifft eine Montagevorrichtung für einen Dichtring, umfassend eine Transport- und Montageschutzhülse für den Dichtring und einen Stempel, durch den die Transport- und Montageschutzhülse in axialer Richtung verschiebbar ist.

### Stand der Technik

Eine solche Montagevorrichtung ist aus der DE 23 40 275 C2 bekannt. Die Transport- und Montageschutzhülse hat zur Begrenzung ihrer axialen Einschiebbewegung einen sich in radialer Richtung erstreckenden Flansch, der an einem stirnseitigen Anschlag eines abzudichtenden Maschinenelements, beispielsweise einer Welle, anlegbar ist.

Die Transport- und Montageschutzhülse besteht aus einem Kunststoff und wird unmittelbar nach der Herstellung des Dichtrings über eine automatische Vorrichtung in diesen eingepresst.

Zur Montage des Dichtrings wird die Transport- und Montageschutzhülse mit dem Dichtring auf das abzudichtende Maschinenelement aufgesetzt, wobei die Transport- und Montageschutzhülse mit dem darauf montierten Dichtring anschließend mit einem Stempel in Montagerichtung eingepresst werden. Kurz vor Erreichen der vorgesehenen Einbaulage des Dichtrings bleibt die Transport-und Montageschutzhülse mit ihrem Flansch am stirnseitigen Anschlag des abzudichtenden Maschinenelements hängen, der Stempel wird axial weiter in Montagerichtung bewegt und die Dichtlippe des Dichtrings gleitet von der Transport- und Montageschutzhülse in ihre vorgesehene Einbaulage. Der Stempel wird dann entgegengesetzt zur Montagerichtung zurück bewegt. Die Transport- und Montageschutzhülse wird anschließend abgenommen und weggeworfen.

### Darstellung der Erfindung

Der Erfindung liegt die Aufgabe zu Grunde, eine Montagevorrichtung der eingangs genannten Art derart weiterzuentwickeln, dass der Montagevorgang vereinfacht und weiter automatisiert ist, insbesondere dass die Transport- und Montageschutzhülse im Anschluss an die Montage des Dichtrings automatisch demontiert wird.

Diese Aufgabe wird erfindungsgemäß mit den Merkmalen von Anspruch 1 gelöst. Auf vorteilhafte Ausgestaltungen nehmen die auf Anspruch 1 rückbezogenen Ansprüche Bezug.

Zur Lösung der Aufgabe ist eine Montagevorrichtung für einen Dichtring vorgesehen, umfassend eine Transport- und Montageschutzhülse für den Dichtring und einen hülsenförmigen Stempel, durch den die Transport- und Montageschutzhülse in axialer Richtung beiderseits beweglich und nach Montage des Dichtrings automatisch demontierbar ist, wobei die Transport- und Montageschutzhülse eine sich in axialer Richtung erstreckende innere Stufe umfasst, die einen Außendurchmesser aufweist, der dem Außendurchmesser eines durch den Dichtring abzudichtenden Maschinenelements entspricht und eine axiale Länge aufweist, die im Wesentlichen der axialen Länge des zu montierenden Dichtrings entspricht, wobei die innere Stufe axial entgegengesetzt zur Montagerichtung durch zumindest einen stirnseitigen Anschlag für den Dichtring begrenzt ist, der einen Bestandteil einer sich ebenfalls in axialer Richtung erstreckenden äußeren Stufe bildet, wobei die äußere Stufe eine erste Mitnehmerfläche aufweist, mit der zumindest ein rastnasenförmiger Mitnehmer des Stempels zur automatischen Demontage der Transport- und Montageschutzhülse bei Bewegung des Stempels entgegengesetzt zur Montagerichtung in Eingriff bringbar ist.

Zur Funktion der Montagevorrichtung wird Folgendes ausgeführt:
Bei dem zu montierenden Dichtring kann es sich zum Beispiel um jede Art von Radialwellendichtring handeln, zum Beispiel mit oder ohne Ringwendelfeder und/oder mit oder ohne Rückförderdrall an der Dichtlippe des Dichtrings zur Rückförderung des abzudichtenden Mediums in den abzudichtende Raum. Zunächst umschließt der zu montierende Dichtring die Transport- und Montageschutzhülse und bildet mit dieser eine vormontierbare Einheit. Dabei ist der Dichtring auf der inneren Stufe der Transport- und Montageschutzhülse angeordnet und umschließt die innere Stufe mit seiner zumindest einen dynamisch beanspruchten Dichtlippe. Die innere Stufe ist auf der der Montagerichtung axial abgewandten Seite mit einem stirnseitigen Anschlag versehen, der die entsprechende Stirnseite des Dichtrings während der Montage anliegend berührt. Dadurch werden die Transport- und Montageschutzhülse und der darauf angeordnete Dichtring mittels des Stempels in Montagerichtung gemeinsam in den Einbauraum bewegt. Auf der der inneren Stufe axial abgewandten Seite schließt sich an den Anschlag die äußere Stufe an, die auf der der inneren Stufe axial abgewandten Seite die erste Mitnehmerfläche aufweist. Die erste Mitnehmerfläche ist bevorzugt als Hinterschnitt ausgebildet. Diese erste Mitnehmerfläche der Transport- und Montageschutzhülse ist erforderlich, um die Transport- und Montageschutzhülse im Anschluss an die Montage des Dichtrings durch den Montagestempel abziehen und dadurch aus dem Einbauraum des Dichtrings entfernen zu können.
Um die Transport- und Montageschutzhülse abziehen zu können, weist der Stempel den rastnasenförmigen Mitnehmer auf. Bei Bewegung axial in Montagerichtung überfährt der Mitnehmer die erste Mitnehmerfläche, schiebt dabei den Dichtring von der Transport- und Montageschutzhülse in seine Einbaulage und nimmt anschließend bei seiner Bewegung axial entgegengesetzt zur Montagerichtung die Transport- und Montageschutzhülse mit, indem der rastnasenförmige Mitnehmer des Stempels mit der ersten Mitnehmerfläche der Transport- und Montageschutzhülse in Eingriff gebracht und die Transport- und Montageschutzhülse dadurch vom abzudichtenden Maschinenelement entfernt wird.
Die Montage des Dichtrings und die Demontage der Transport- und Montageschutzhülse erfolgt durch jeweils nur eine einzige axiale Hin- und Herbewegung des Stempels, praktisch voll automatisch und mit hoher Prozesssicherheit. Dabei hat die Montagevorrichtung einen einfachen, teilarmen und kostengünstigen Aufbau. Entscheidend ist, dass die Transport-und Montageschutzhülse und der Stempel für ihr zuvor beschriebenes Zusammenwirken konstruktiv aufeinander abgestimmt sind.

Die erste Mitnehmerfläche kann durch die der inneren Stufe axial zugewandten Stirnseite der äußeren Stufe gebildet sein. Die erste Mitnehmerfläche ist auf der dem Dichtring axial abgewandten Seite der äußeren Stufe angeordnet. Bei der automatischen Demontage setzt der rastnasenförmige Mitnehmer des Stempels also am axial stirnseitigen Ende der Transport- und Montageschutzhülse an. Die Gefahr, dass sich die Transport- und Montageschutzhülse während ihrer automatischen Demontage durch den Mitnehmer des Stempels verkantet und es dadurch zu Funktionsbeinträchtigungen kommt, ist dadurch auf ein Minimum reduziert.

Bevorzugt weist der Mitnehmer zur Montage des Dichtrings zum axialen Überfahren der äußeren Stufe in Montagerichtung eine Auflaufschräge auf, wobei der Mitnehmer zur automatischen Demontage der Transport- und Montageschutzhülse entgegen der Montagerichtung eine sich im Wesentlichen in radialer Richtung erstreckende zweite Mitnehmerfläche aufweist, die nach der Montage des Dichtrings bei Bewegung des Stempels entgegen der Montagerichtung an die erste Mitnehmerfläche anlegbar ist. Die erste Mitnehmerfläche der Transport- und Montageschutzhülse und die zweite Mitnehmerfläche des Mitnehmers des Stempels sind demnach funktionstechnisch aufeinander abgestimmt. Zum Beispiel können die beiden Mitnehmerflächen jeweils eben ausgebildet sein und dadurch flächig aneinander anliegen.

Die Transport- und Montageschutzhülse besteht bevorzugt aus einem elastisch deformierbarem Werkstoff, beispielsweise aus einem polymeren Werkstoff. Bei axialer Bewegung der Auflaufschräge über die Mitnehmerfläche der äußeren Stufe bei Montage des Dichtrings verformt sich die Transport- und Montageschutzhülse elastisch und nimmt ihre ursprüngliche Form wieder an, sobald die Auflaufschräge die erste Mitnehmerfläche in axialer Richtung überfahren hat. Im Anschluss an die Montage des Dichtrings, wenn sich der Stempel axial entgegengesetzt zur Montagerichtung bewegt, gelangen die erste Mitnehmerfläche und der rastnasenförmige Mitnehmer miteinander in Eingriff, so dass die Transport- und Montageschutzhülse durch die axiale Bewegung des Stempels entgegengesetzt zur Montagerichtung automatisch abgezogen wird.

Die äußere Stufe kann zumindest einen Vorsprung aufweisen, der mit einem Gegenvorsprung des Mitnehmers in Umfangsrichtung bajonettartig in Eingriff bringbar ist. Durch eine solche Ausgestaltung besteht die Möglichkeit, dass die Transport- und Montageschutzhülse bei ihrer Mitnahme axial entgegengesetzt zur Montagerichtung gleichzeitig um ihre Symmetrieachse gedreht wird. Dadurch lässt sich die Transport-und Montageschutzhülse leichter abziehen.

Bevorzugt weist der Stempel in Montagerichtung einen hülsenförmigen Axialvorsprung mit einer axialen Länge, die zumindest der Summe aus den axialen Längen von innerer und äußerer Stufe entspricht, und mit einer freien Stirnseite auf. Hierbei ist von Vorteil, dass der Dichtring durch den Stempel in jedem Fall ohne Beschädigung sicher in axialer Richtung von der Transport-und Montageschutzhülse heruntergeschoben und in seinem Einbauraum positioniert werden kann. Der Einbau des Dichtrings in seinen Einbauraum kann dabei zweistufig erfolgen. Zunächst schiebt der Stempel den Dichtring zum Beispiel mit seinem Außenumfang in das Gehäuse eines Maschinenelements soweit ein, bis der Außenumfang des Dichtrings von dem Gehäuse vollständig umschlossen ist. In der zweiten Stufe, die sich direkt an die erste Stufe anschließt, wird der Dichtring von dem Stempel dann von der inneren Stufe axial auf die abzudichtende Fläche des abzudichtenden Maschinenelements geschoben, wobei der Außendurchmesser der inneren Stufe zumindest so groß ist, wie der Außendurchmesser des abzudichtenden Maschinenelements. Dadurch kann der Dichtring ohne Beschädigung seiner zumindest einen dynamisch beanspruchten Dichtlippe axial von der inneren Stufe auf das abzudichtende Maschinenelement geschoben werden.

Der Mitnehmer kann, ausgehend von der freien Stirnseite des Axialvorsprungs, um die axiale Länge der inneren Stufe entgegen der Montagerichtung zurückversetzt am Innenumfang des Axialvorsprungs angeordnet sein. Dadurch ist die Transport- und Montageschutzhülse nach ihrer Demontage entlang ihrer gesamten axialen Erstreckung vom Stempel umschlossen. Die Transport- und Montageschutzhülse ist dadurch während ihrer Demontage vor äußeren Einflüssen gut geschützt.

Der Mitnehmer kann in Umfangsrichtung umlaufend in sich geschlossen ausgebildet sein. Durch eine derartige Gestaltung des Mitnehmers liegt dieser vergleichsweise großflächig an der ersten Mitnehmerfläche der Transport- und Montageschutzhülse an und kann diese verkantungsfrei und mit minimaler spezifischer Flächenpressung vom Dichtring abziehen. Die Prozesssicherheit ist durch einen umlaufend in sich geschlossen ausgebildeten Mitnehmer optimiert.

Die äußere Stufe kann einen Außenumfang aufweisen, wobei der Stempel auf dem Außenumfang der äußeren Stufe geführt ist. Durch diese Führung ist nicht nur der Stempel und die Transport- und Montageschutzhülse besonders exakt zu einander positioniert, sondern ebenfalls auch der Dichtring, der die innere Stufe der Transport- und Montageschutzhülse zunächst umschließt. Eine solche gute räumliche Zuordnung zueinander ist für eine problemlose Montage des Dichtrings in seinen Einbauraum von Vorteil. Durch diese gute räumliche Zuordnung wird sichergestellt, dass der Dichtring bei seiner Montage in den Einbauraum verkantungsfrei bewegt und dadurch nicht beschädigt wird, insbesondere dass die Dichtlippen des Dichtrings unbeschädigt bleiben.

Der Axialvorsprung weist einen Außenumfang mit einem Außendurchmesser auf, der zu montierende Dichtring weist einen Außendurchmesser auf und der Außendurchmesser des Außenumfangs entspricht bevorzugt dem Außendurchmesser des zu montierenden Dichtrings. Durch eine solche Ausgestaltung legt sich die freie Stirnseite des Axialvorsprungs in radialer Richtung möglichst weit außen an die axial benachbarte Stirnseite des Dichtrings an. Beim axialen Einschieben des Dichtrings in seinen Einbauraum wird dadurch nicht nur der Dichtring durch die begrenzende Wandung des Einbauraums geführt, sondern auch der Stempel im Bereich seines Axialvorsprungs. Dadurch, dass sowohl der Dichtring als auch der Axialvorsprung denselben Außendurchmesser aufweisen und beide Bauteile während der Montage des Dichtrings in seinen Einbauraum durch die selbe, den Einbauraum begrenzende Wandung des Einbauraums geführt sind, erfolgt die Montage des Dichtrings besonders Prozesssicher ohne Verkantung und ohne daraus resultierende mechanische Überbeanspruchung des Dichtrings, insbesondere des Werkstoffs, aus dem die dynamisch beanspruchten Dichtlippen bestehen.

Die Summe aus radialer Dicke der äußeren Stufe und radialer Dicke des Axialvorsprungs entspricht bevorzugt der Höhe des zu montierenden Dichtrings. Die gesamte Stirnseite ist während der Montage des Dichtrings dadurch weitgehend gleichmäßig belastet. Punktuelle Überbeanspruchungen und daraus resultierende mögliche Beschädigungen werden dadurch verhindert. Die Flächenpressung auf die Stirnseite des Dichtrings bei seiner Montage ist dadurch vergleichsmäßig.

Der Axialvorsprung kann auf seiner der freien Stirnseite axial abgewandten Seite einen Anschlag aufweisen, der den axialen Montageweg des Dichtrings in seinen Einbauraum begrenzt. Dieser Anschlag legt sich während des Montagevorgangs des Dichtrings in seinen Einbauraum zum Beispiel an einen Gegenanschlag des abzudichtenden Maschinenelements an. Bezogen auf diesen Gegenanschlag ist der montierte Dichtring in axialer Richtung stets exakt positioniert.

Die Transport- und Montageschutzhülse kann bevorzugt aus einem polymeren Werkstoff bestehen. Hierbei ist von Vorteil, dass eine solche Transport- und Montageschutzhülse einfach und kostengünstig herstellbar ist. Außerdem kann sie im Anschluss an die Montage des Dichtrings häufig wiederverwendet werden.

In Abhängigkeit von den jeweiligen Gegebenheiten des Anwendungsfalls besteht die Möglichkeit, dass die Transport- und Montageschutzhülse aus einem reibungsverringernden polymeren Werkstoff, wie beispielsweise PTFE, besteht oder zum Beispiel durch einen Gleitlack beschichtet ist. Sowohl das abstreifen des Dichtrings von der inneren Stufe der Transport- und Montageschutzhülse als auch die Führung des Stempels auf dem Außenumfang der äußeren Stufe erfolgt dadurch besonders reibungsarm. Abrasiver Verschleiß der jeweiligen Reibpartner ist dadurch auf ein Minimum begrenzt.

Außerdem ist die Transport- und Montageschutzhülse bevorzugt einstückig und materialeinheitlich ausgebildet. Sie ist dadurch einfach und kostengünstig herstellbar und kann bedarfsweise sortenrein recycelt werden.

Die Transport- und Montageschutzhülse bildet mit dem zu montierenden Dichtring bevorzugt eine vormontierbare Einheit. Durch diese vormontierbare Einheit wird erreicht, dass der auf der Transport- und Montageschutzhülse montierte Dichtring während seiner Lagerung und während des Transports gut vor äußeren Einflüssen und damit vor Beschädigungen geschützt ist. Außerdem wird der Dichtring dadurch während der Lagerung und des Transports in Form gehalten. Zur Montage wird die vormontierbare Einheit zunächst axial in Montagerichtung am Einbauraum des Dichtrings positioniert, also praktisch zum Beispiel auf die abzudichtende Welle zunächst im Wesentlichen lose aufgesteckt. Anschließend wird der Stempel in axialer Richtung an die vormontierbare Einheit herangeführt und drückt den Dichtring, wie zuvor beschrieben, in axialer Richtung von der Transport- und Montageschutzhülse in den Einbauraum. Im Anschluss daran wird der Stempel entgegen der Montagerichtung zurückgezogen und nimmt dabei automatisch die Transport- und Montageschutzhülse mit.

Der Stempel kann aus einem metallischen Werkstoff bestehen. Stempel aus einem derartigen Werkstoff weisen hohe Standzeiten auf.

Außerdem betrifft die Erfindung einen Dichtring, der mit einer Transport- und Montageschutzhülse, wie zuvor beschrieben, eine vormontierbare Einheit bildet.
Wie zuvor beschrieben, ist der Dichtring durch die Transport- und Montageschutzhülse gut vor äußeren Einflüssen geschützt und die Montage des Dichtrings in seinen Einbauraum kann durch die vormontierbare Einheit einfach und prozesssicher vorgenommen werden. Nach erfolgter Montage des Dichtrings kann die Transport- und Montageschutzhülse durch einen angepassten Stempel einer Montagevorrichtung automatisch demontiert werden.

### Kurzbeschreibung der Zeichnung

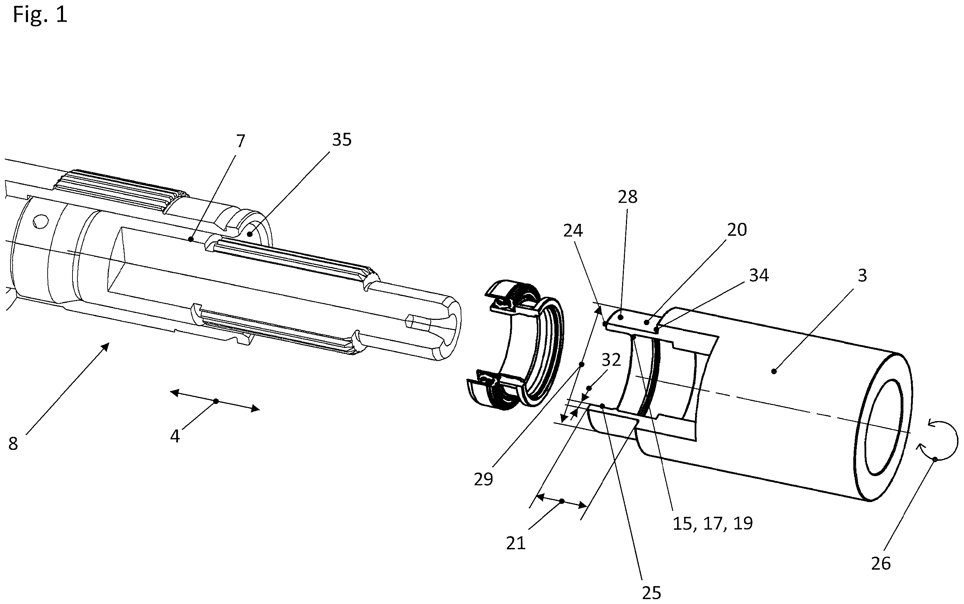

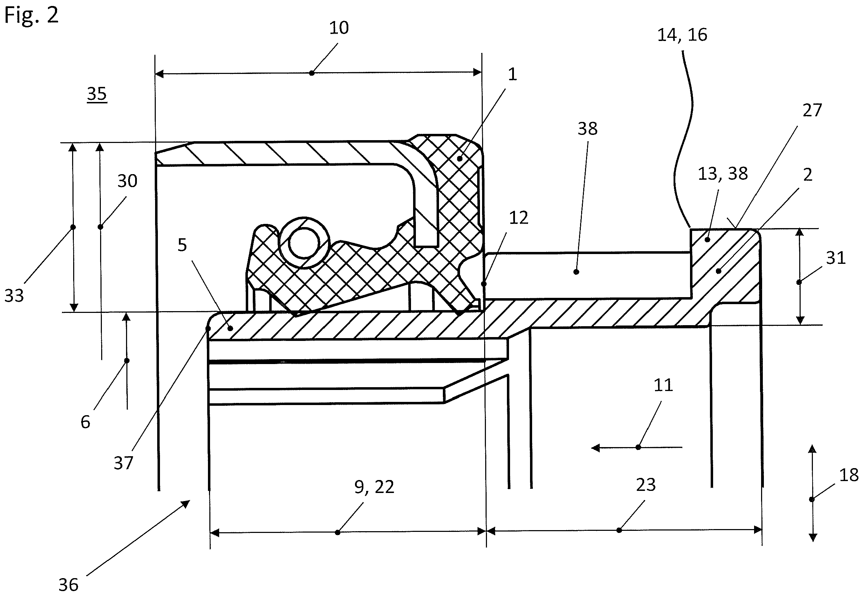

Jeweils ein Ausführungsbeispiel der erfindungsgemäßen Montagevorrichtung und des Dichtrings, der mit der Transport- und Montageschutzhülse eine vormontierbare Einheit bildet, werden nachfolgend anhand der Figuren 1 und 2 näher erläutert.

Diese zeigen jeweils in schematischer Darstellung:
- In Figur 1: eine Montagevorrichtung, die eine Transport- und Montageschutzhülse und einen hülsenförmigen Stempel umfasst, wobei die Transport- und Montageschutzhülse, der hülsenförmige Stempel sowie ein abzudichtendes Maschinenelement jeweils in perspektivischer Darstellung in Form einer Explosionszeichnung gezeigt sind,
- in Figur 2: den Dichtring aus Figur 1, der mit der Transport- und Montageschutzhülse eine vormontierbare Einheit bildet.

### Ausführung der Erfindung

In Figur 1 ist die erfindungsgemäße Montagevorrichtung gezeigt. Der zu montierende Dichtring 1 ist auf der Transport- und Montageschutzhülse 2 montiert und soll durch die Montagevorrichtung in den Einbauraum 35 montiert werden. Das abzudichtende Maschinenelement 8 ist hier als Welle ausgebildet; der Dichtring 1 als Radialwellendichtring.

Zur Montage der vormontierbaren Einheit 36, umfassend den Dichtring 1 und die Transport- und Montageschutzhülse 2, wird die vormontierbare Einheit 36 zunächst auf das abzudichtende Maschinenelement 8 aufgefädelt, und axial bis an die Grenze des Einbauraums 35 bewegt.
Das Einpressen der vormontierbaren Einheit in den Einbauraum 35 übernimmt der hülsenförmige Stempel 3.
Sobald die vormontierbare Einheit 36 mit dem Dichtring 1 dem Einbauraum 35 lose benachbart zugeordnet ist, bewegt sich der Stempel 3 axial über die Stirnseite des abzudichtenden Maschinenelements 8 axial in Richtung der vormontierbaren Einheit 36, überfährt dabei mit seinem Axialvorsprung 20 und dem rastnasenförmigen Mitnehmer 15 die erste Mitnehmerfläche 14 und die äußere Stufe 13, bis die freie Stirnseite 24 des Axialvorsprungs 20 die dem Stempel 3 axial zugewandte Stirnseite des Dichtrings 1 anliegend berührt.

Anschließend wird die gesamte vormontierbare Einheit 36 axial in den Einbauraum 35 geschoben, und zwar so lange, bis der freie stirnseitige Rand 37 der inneren Stufe 5 einen Anschlag des abzudichtenden Maschinenelements 8 anliegend berührt. Die Transport- und Montageschutzhülse 2 der vormontierbaren Einheit 36 lässt sich dann nicht mehr weiter axial in den Einbauraum 35 verschieben.

Die Hülse 3 wird dennoch axial in Montagerichtung 11 weiter in Richtung des Einbauraums 35 verschoben, wobei sich dann von der vormontierbaren Einheit 36 nur noch der Dichtring 1 axial in Richtung des Einbauraums 35 bewegt. Er wird durch den Stempel von der inneren Stufe 5 abgestreift und lagerichtig in seinem Einbauraum 35 positioniert.
Der Außendurchmesser 6 der inneren Stufe 5, die von der Dichtlippe des Dichtrings 1 zunächst anliegend umschlossen ist, entspricht dem Außendurchmesser 7 der abzudichtenden Oberfläche des abzudichtenden Maschinenelements 8, so dass der Dichtring 1 durch den Stempel 3 problemlos von der inneren Stufe 5 der Transport- und Montageschutzhülse 2 in den Einbauraum 35 geschoben werden kann, ohne dass die empfindlichen Dichtlippen des Dichtrings 1 beschädigt werden.

Hat der Dichtring 1 seine axiale Einbauposition erreicht, wird der Stempel 3 axial entgegengesetzt zur Montagerichtung 11 zurückbewegt und nimmt durch seinen rastnasenförmigen Mitnehmer 15 die Transport- und Montageschutzhülse 2 vom abzudichtenden Maschinenelement 8 mit.
Der rastnasenförmige Mitnehmer 15 verhakt sich dazu mit der ersten Mitnehmerfläche 14 der Transport- und Montageschutzhülse 2.

Die Transport- und Montageschutzhülse 2 wird nach Montage des Dichtrings 1 durch den Stempel 3 automatisch demontiert.

Die innere Stufe 5 hat axial entgegengesetzt zur Montagerichtung 11 einen stirnseitigen Anschlag 12 für den Dichtring 1, wobei der Dichtring 1 diesen stirnseitigen Anschlag 12 dann anliegend berührt, wenn er mit der Transport-und Montageschutzhülse 2 die vormontierbare Einheit 36 bildet. Der stirnseitige Anschlag 12 Trend in axialer Richtung 4 die innere Stufe 5 von der äußeren Stufe 13, die die erste Mitnehmerfläche 14 aufweist, mit der der rastnasenförmige Mitnehmer 15 des Stempels 3 in Eingriff bringbar ist.

Die Transport- und Montageschutzhülse 2 muss derart auf den hülsenförmigen Stempel 3 abgestimmt sein, dass die Transport- und Montageschutzhülse 2 bei Bewegung des Stempels 3 entgegengesetzt zur Montagerichtung 11 automatisch aus dem Einbauraum 35 demontiert wird. Der Mitnehmer 15 weist dazu die Auflaufschräge 17 und die zweite Mitnehmerfläche 19 auf. Die Auflaufschräge 17 ermöglicht, dass der Mitnehmer 15 zur Montage des Dichtrings 1 in den Einbauraum 35 die erste Mitnehmerfläche 14 und die äußere Stufe 13 in Montagerichtung 11 überfährt, wobei die sich im wesentlichen in radialer Richtung 18 erstreckende zweite Mitnehmerfläche 19 an die erste Mitnehmerfläche 14 anlegbar ist, um bei Bewegungen des Stempels 3 axial entgegen der Montagerichtung 11 die Transport- und Montageschutzhülse 2 automatisch aus dem Einbauraum 35 mitzunehmen. Der Axialvorsprung 20 des Stempels 3 hat eine axiale Länge 21, die in dem hier gezeigten Ausführungsbeispiel etwas größer als die Summe aus der axialen Länge 22, 23 von innerer 5 und äußerer Stufe 13 ist.
Nachdem der Stempel 3 bei axialer Bewegung entgegen der Montagerichtung 11 die Transport- und Montageschutzhülse 2 mitgenommen hat, ist die Transport- und Montageschutzhülse 2 vollständig vom Axialvorsprung 20 umschlossen und dadurch gut vor äußeren Einflüssen geschützt.
Der rastnasenförmige Mitnehmer 15 ist in Umfangsrichtung 26 umlaufend in sich geschlossen ausgebildet.

Der Außenumfang 27 der äußeren Stufe 13 bildet eine Führungsfläche für den Stempel 3, wobei der Innenumfang 25 des Axialvorsprungs 20 die Gegenführungsfläche zu dem Außenumfang 27 der äußeren Stufe 13 bildet. Eine verkantungsfreie Zuordnung und Relativbeweglichkeit der jeweiligen Bauteile bei der Montage des Dichtrings 1 ist dadurch sichergestellt.

Der Außendurchmesser 29 des Außenumfangs 28 des Axialvorsprungs 20 entspricht etwa dem Außendurchmesser 30 des zu montierenden Dichtrings 1, wobei die Summe aus radialer Dicke 31 der äußeren Stufe 13 und radialer Dicke 32 des Axialvorsprungs 20 der Höhe 33 des zu montierenden Dichtrings 1 entspricht.

In Figur 2 ist die vormontierbare Einheit 36 gezeigt, die den Dichtring 1 und die Transport- und Montageschutzhülse 2 umfasst, wobei der Dichtring 1 die innere Stufe 5 der Transport- und Montageschutzhülse 2 anliegend umschließt und in axialer Richtung 4 am stirnseitigen Anschlag 12 der inneren Stufe 5 abgestützt ist.

Die Transport- und Montageschutzhülse 2 besteht im hier gezeigten Ausführungsbeispiel aus einem polymeren Werkstoff und ist einstückig und materialeinheitlich ausgebildet.

## Patentansprüche

1. Montagevorrichtung für einen Dichtring (1), umfassend eine Transport-und Montageschutzhülse (2) für den Dichtring (1) und einen hülsenförmigen Stempel (3), durch den die Transport- und Montageschutzhülse (2) in axialer Richtung (4) beiderseits beweglich und nach Montage des Dichtrings (1) automatisch demontierbar ist, wobei die Transport- und Montageschutzhülse (2) eine sich in axialer Richtung (4) erstreckende innere Stufe (5) umfasst, die einen Außendurchmesser (6) aufweist, der dem Außendurchmesser (7) eines durch den Dichtring (1) abzudichtenden Maschinenelements (8) entspricht und eine axiale Länge (9) aufweist, die im Wesentlichen der axialen Länge (10) des zu montierenden Dichtrings (1) entspricht, wobei die innere Stufe (5) axial entgegengesetzt zur Montagerichtung (11) durch zumindest einen stirnseitigen Anschlag (12) für den Dichtring (1) begrenzt ist, der einen Bestandteil einer sich ebenfalls in axialer Richtung (4) erstreckenden äußeren Stufe (13) bildet, **dadurch gekennzeichnet, dass** die äußere Stufe (13) eine erste Mitnehmerfläche (14) aufweist, mit der zumindest ein rastnasenförmiger Mitnehmer (15) des Stempels (3) zur automatischen Demontage der Transport- und Montageschutzhülse (2) bei Bewegung des Stempels (3) entgegengesetzt zur Montagerichtung (11) in Eingriff bringbar ist.

2. Montagevorrichtung nach Anspruch 1, **dadurch gekennzeichnet, dass** die erste Mitnehmerfläche (14) durch die der inneren Stufe (5) axial zugewandte Stirnseite (16) der äußeren Stufe (13) gebildet ist.

3. Montagevorrichtung nach einem der Ansprüche 1 oder 2, **dadurch gekennzeichnet, dass** der Mitnehmer (15) zur Montage des Dichtrings (1) zum axialen Überfahren der äußeren Stufe (13) in Montagerichtung (11) eine Auflaufschräge (17) aufweist und dass der Mitnehmer (15) zur automatischen Demontage der Transport- und Montageschutzhülse (2) entgegen der Montagerichtung (11) eine sich im Wesentlichen in radialer Richtung (18) erstreckende zweite Mitnehmerfläche (19) aufweist, die nach der Montage des Dichtrings (1) bei Bewegung der Stempels (3) entgegen der Montagerichtung (11) an die erste Mitnehmerfläche (14) anlegbar ist.

4. Montagevorrichtung nach einem der Ansprüche 1 bis 3, **dadurch gekennzeichnet, dass** die äußere Stufe (13) zumindest einen Vorsprung aufweist, der mit einem Gegenvorsprung des Mitnehmers (15) in Umfangsrichtung (26) bajonettartig in Eingriff bringbar ist.

5. Montagevorrichtung nach einem der Ansprüche 1 bis 4, **dadurch gekennzeichnet, dass** der Stempel (3) in Montagerichtung (11) einen hülsenförmigen Axialvorsprung (20) mit einer axialen Länge (21), die zumindest der Summe aus den axialen Längen (22, 23) von innerer (5) und äußerer Stufe (13) entspricht, und mit einer freien Stirnseite (24) aufweist.

6. Montagevorrichtung nach einem der Ansprüche 1 bis 5, **dadurch gekennzeichnet, dass** der Mitnehmer (15), ausgehend von der freien Stirnseite (24) des Axialvorsprungs (20), um die axiale Länge (22) der inneren Stufe (5) entgegen der Montagerichtung (11) zurückversetzt am Innenumfang (25) des Axialvorsprungs (20) angeordnet ist.

7. Montagevorrichtung nach Anspruch 6, **dadurch gekennzeichnet, dass** der Mitnehmer (15) in Umfangsrichtung (26) umlaufend in sich geschlossen ausgebildet ist.

8. Montagevorrichtung nach einem der Ansprüche 1 bis 7, **dadurch gekennzeichnet, dass** die äußere Stufe (13) einen Außenumfang (27) aufweist und dass der Stempel (3) auf dem Außenumfang (27) der äußeren Stufe (13) im Gebrauch geführt ist.

9. Montagevorrichtung nach Anspruch 8, **dadurch gekennzeichnet, dass** der Innenumfang (25) des Axialvorsprungs (20) auf dem Außenumfang (27) der äußeren Stufe (13) im Gebrauch geführt ist.

10. Montagevorrichtung nach einem der Ansprüche 5 bis 9, **dadurch gekennzeichnet, dass** der Axialvorsprung (20) einen Außenumfang (28) mit einem Außendurchmesser (29) aufweist, dass der zu montierende Dichtring (1) einen Außendurchmesser (30) aufweist und dass der Außendurchmesser (29) des Außenumfangs (28) dem Außendurchmesser (30) des zu montierenden Dichtrings (1) entspricht.

11. Montagevorrichtung nach einem der Ansprüche 5 bis 10, **dadurch gekennzeichnet, dass** die Summe aus radialer Dicke (31) der äußeren Stufe (13) und radialer Dicke (32) des Axialvorsprungs (20) der Höhe (33) des zu montierenden Dichtrings (1) entspricht.

12. Montagevorrichtung nach einem der Ansprüche 5 bis 11, **dadurch gekennzeichnet, dass** der Axialvorsprung (20) auf seiner der freien Stirnseite (24) axial abgewandten Seite einen Anschlag (34) aufweist, der den axialen Montageweg des Dichtrings (1) in seinen Einbauraum (35) begrenzt.

13. Montagevorrichtung nach einem der Ansprüche 1 bis 12, **dadurch gekennzeichnet, dass** die Transport- und Montageschutzhülse (2) aus einem polymeren Werkstoff besteht.

14. Montagevorrichtung nach einem der Ansprüche 1 bis 13, **dadurch gekennzeichnet, dass** der Stempel (3) aus einem metallischen Werkstoff besteht.

15. Dichtring (1), der mit einer Transport- und Montageschutzhülse (2) nach einem der Ansprüche 1 bis 14 eine vormontierbare Einheit (36) bildet.

## Claims

1. Mounting device for a sealing ring (1), comprising a transport and mounting protective sleeve (2) for the sealing ring (1) and a sleeve-shaped punch (3) by means of which the transport and mounting protective sleeve (2) is movable on both sides in the axial direction (4) and is automatically removable after the sealing ring (1) is mounted, wherein the transport and mounting protective sleeve (2) comprises an inner step (5) which extends in the axial direction (4) and has an outside diameter (6) which corresponds to the outside diameter (7) of a machine element (8) to be sealed by the sealing ring (1) and has an axial length (9) which substantially corresponds to the axial length (10) of the sealing ring (1) to be mounted, wherein the inner step (5) is bounded axially in the opposite direction to the mounting direction (11) by at least one end-side stop (12) for the sealing ring (1), which stop forms part of an outer step (13) likeswise extending in the axial direction (4), **characterized in that** the outer step (13) has a first driver surface (14) with which at least one latching-lug-shaped driver (15) of the punch (3) can be brought into engagement for the automatic removal of the transport and mounting protective sleeve (2) when the punch (3) moves in the opposite direction to the mounting direction (11).

2. Mounting device according to Claim 1, **characterized in that** the first driver surface (14) is formed by the end side (16) of the outer step (13), which end side faces the inner step (5) axially.

3. Mounting device according to either of Claims 1 and 2, **characterized in that**, for mounting the sealing ring (1), the driver (15) has a run-on slope (17) for moving axially over the outer step (13) in the mounting direction (11), and **in that**, for the automatic removal of the transport and mounting protective sleeve (2) counter to the mounting direction (11), the driver (15) has a second driver surface (19) which extends substantially in the radial direction (18) and, after the sealing ring (1) is mounted, can be placed against the first driver surface (14) when the punch (3) moves counter to the mounting direction (11).

4. Mounting device according to one of Claims 1 to 3, **characterized in that** the outer step (13) has at least one projection which can be brought into engagement in the circumferential direction (26) with a mating projection of the driver (15) in a bayonet-like manner.

5. Mounting device according to one of Claims 1 to 4, **characterized in that** the punch (3) has, in the mounting direction (11), a sleeve-shaped axial projection (20) with an axial length (21) which corresponds at least to the sum of the axial lengths (22, 23) of the inner step (5) and outer step (13), and with a free end side (24).

6. Mounting device according to one of Claims 1 to 5, **characterized in that**, starting from the free end side (24) of the axial projection (20), the driver (15) is arranged on the inner circumference (25) of the axial projection (20) in a manner set back counter to the mounting direction (11) by the axial length (22) of the inner step (5).

7. Mounting device according to Claim 6, **characterized in that** the driver (15) is formed in a peripherally self-contained manner in the circumferential direction (26).

8. Mounting device according to one of Claims 1 to 7, **characterized in that** the outer step (13) has an outer circumference (27), and **in that** the punch (3) is guided in use on the outer circumference (27) of the outer step (13).

9. Mounting device according to Claim 8, **characterized in that** the inner circumference (25) of the axial projection (20) is guided in use on the outer circumference (27) of the outer step (13).

10. Mounting device according to one of Claims 5 to 9, **characterized in that** the axial projection (20) has an outer circumference (28) with an outside diameter (29), **in that** the sealing ring (1) to be mounted has an outside diameter (30), and **in that** the outside diameter (29) of the outer circumference (28) corresponds to the outside diameter (30) of the sealing ring (1) to be mounted.

11. Mounting device according to one of Claims 5 to 10, **characterized in that** the sum of radial thickness (31) of the outer step (13) and radial thickness (32) of the axial projection (20) corresponds to the height (33) of the sealing ring (1) to be mounted.

12. Mounting device according to one of Claims 5 to 11, **characterized in that** the axial projection (20), on the side thereof facing away axially from the free end side (24), has a stop (34) which limits the axial mounting travel of the sealing ring (1) into the installation space (35) thereof.

13. Mounting device according to one of Claims 1 to 12, **characterized in that** the transport and mounting protective sleeve (2) is composed of a polymeric material.

14. Mounting device according to one of Claims 1 to 13, **characterized in that** the punch (3) is composed of a metallic material.

15. Sealing ring (1) which forms a preassembleable unit (36) with a transport and mounting protective sleeve (2) according to one of Claims 1 to 14.

## Revendications

1. Dispositif de montage pour une bague d'étanchéité (1), comprenant une douille de protection de transport et de montage (2) pour la bague d'étanchéité (1) et un poinçon en forme de douille (3), par lequel la douille de protection de transport et de montage (2) est mobile de part et d'autre en direction axiale (4) et peut être démontée automatiquement après le montage de la bague d'étanchéité (1), dans lequel la douille de protection de transport et de montage (2) comprend un gradin intérieur (5) s'étendant en direction axiale (4), qui présente un diamètre extérieur (6) qui correspond au diamètre extérieur (7) d'un élément de machine (8) à rendre étanche au moyen de la bague d'étanchéité (1) et qui présente une longueur axiale (9) qui correspond essentiellement à la longueur axiale (10) de la bague d'étanchéité (1) à monter, dans lequel le gradin intérieur (5) est limité axialement en direction opposée à la direction de montage (11) par au moins une butée frontale (12) pour la bague d'étanchéité (1), qui forme un composant d'un gradin extérieur (13) s'étendant également en direction axiale (4), **caractérisé en ce que** le gradin extérieur (13) présente une première face d'entraîneur (14), avec laquelle au moins un entraîneur en forme d'ergot d'encliquetage (15) du poinçon (3) peut être mis en prise pour le démontage automatique de la douille de protection de transport et de montage (2) lors d'un mouvement du poinçon (3) en direction opposée à la direction de montage (11).

2. Dispositif de montage selon la revendication 1, **caractérisé en ce que** la première face d'entraîneur (14) est formée par le côté frontal (16) du gradin extérieur (13) tourné axialement vers le gradin intérieur (5).

3. Dispositif de montage selon une des revendications 1 ou 2, **caractérisé en ce que** l'entraîneur (15) présente pour le montage de la bague d'étanchéité (1) une rampe de montée (17) en vue du franchissement axial du gradin extérieur (13) dans la direction de montage (11) et **en ce que** l'entraîneur (15) présente pour le démontage automatique de la douille de protection de transport et de montage (2) en direction opposée à la direction de montage (11) une deuxième face d'entraîneur (19) s'étendant essentiellement en direction radiale (18), qui après le montage de la bague d'étanchéité (1) peut être appliquée sur la première face d'entraîneur (14) lors du mouvement du poinçon (3) en direction opposée à la direction de montage (11).

4. Dispositif de montage selon l'une quelconque des revendications 1 à 3, **caractérisé en ce que** le gradin extérieur (13) présente au moins une saillie, qui peut être mise en prise en mode baïonnette en direction périphérique (26) avec une saillie opposée de l'entraîneur (15).

5. Dispositif de montage selon l'une quelconque des revendications 1 à 4, **caractérisé en ce que** le poinçon (3) présente dans la direction de montage (11) une saillie axiale en forme de douille (20) avec une longueur axiale (21), qui correspond au moins à la somme des longueurs axiales (22, 23) des gradins intérieur (5) et extérieur (13), et avec un côté frontal libre (24).

6. Dispositif de montage selon l'une quelconque des revendications 1 à 5, **caractérisé en ce que** l'entraîneur (15) est disposé, à partir du côté frontal libre (24) de la saillie axiale (20), en retrait de la longueur axiale (22) du gradin intérieur (5) en direction opposée à la direction de montage (11) sur la périphérie intérieure (25) de la saillie axiale (20).

7. Dispositif de montage selon la revendication 6, **caractérisé en ce que** l'entraîneur (15) est par nature de forme fermée circulaire en direction périphérique (26).

8. Dispositif de montage selon l'une quelconque des revendications 1 à 7, **caractérisé en ce que** le gradin extérieur (13) présente une périphérie extérieure (27) et **en ce que** le poinçon (3) est en service guidé sur la périphérie extérieure (27) du gradin extérieur (13).

9. Dispositif de montage selon la revendication 8, **caractérisé en ce que** la périphérie intérieure (25) de la saillie axiale (20) est en service guidée sur la périphérie extérieure (27) du gradin extérieur (13).

10. Dispositif de montage selon l'une quelconque des revendications 5 à 9, **caractérisé en ce que** la saillie axiale (20) présente une périphérie extérieure (28) avec un diamètre extérieur (29), **en ce que** la bague d'étanchéité à monter (1) présente un diamètre extérieur (30) et **en ce que** le diamètre extérieur (29) de la périphérie extérieure (28) correspond au diamètre extérieur (30) de la bague d'étanchéité à monter (1).

11. Dispositif de montage selon l'une quelconque des revendications 5 à 10, **caractérisé en ce que** la somme de l'épaisseur radiale (31) du gradin extérieur (13) et de l'épaisseur radiale (32) de la saillie axiale (20) correspond à la hauteur (33) de la bague d'étanchéité à monter (1).

12. Dispositif de montage selon l'une quelconque des revendications 5 à 11, **caractérisé en ce que** la saillie axiale (20) présente sur son côté axialement détourné du côté frontal libre (24) une butée (34), qui limite la course de montage axiale de la bague d'étanchéité (1) dans son espace de montage (35).

13. Dispositif de montage selon l'une quelconque des revendications 1 à 12, **caractérisé en ce que** la douille de protection de transport et de montage (2) se compose d'un matériau polymère.

14. Dispositif de montage selon l'une quelconque des revendications 1 à 13, **caractérisé en ce que** le poinçon (3) se compose d'un matériau métallique.

15. Bague d'étanchéité (1), qui forme une unité pouvant être préassemblée (36) avec une douille de protection de transport et de montage (2) selon l'une quelconque des revendications 1 à 14.
